# EUROPEAN PATENT APPLICATION

(11) **EP 1 821 374 A2**
(43) Date of publication of application: **22.08.2007**
(21) Application number: 07250660.3
(22) Date of filing: 16.02.2007
(51) Int. Cl.: H01R 43/02, H02G 1/14

(54) **Apparatus and method for heating an infrared-initiated splice seal**

(30) Priority: 18.02.2006 GB 0603293
(71) Applicant: Tyco Electronics UK Ltd., Dorcan Swindon SN3 5HH (GB)
(72) Inventor: Rodway, Giles, Calne, Wiltshire SN11 8DJ (GB); Miles, Graham, Shaw, Swindon SN5 5RA (GB); Pope, Martin, Swindon, Wiltshire SN25 3EP (GB); Priddle, Martyn, Purton, Swindon, Wiltshire SN5 4AE (GB); Hammond, Philip, Wootton Bassett, Wiltshire SN4 8BJ (GB)
(74) Representative: Powell, Timothy John

(57) **Abstract**

An apparatus (20), for heating an infrared-initiated splice seal (10), comprises a heating area (21) defined by one or more structural components (22,23) and supporting one or more sources (31) of infrared heat energy; a splice support for supporting an infrared-initiated splice seal in the heating area; and one or more cooling devices (34;36) for conductingly and/or conductively cooling one or more said structural components (22,23) and/or the splice support whereby in use of the apparatus (20) a splice seal supported on the splice support is subject to radiant heat from the one or more sources of infrared heat energy.

## Description

This invention relates to apparatus and a method for heating an infrared-initiated splice seal or a similar structure.

By "infrared-initiated splice seal" is meant an arrangement, for protecting and sealing otherwise exposed wire splices, of a kind whose installation relies on heating using infrared energy to commence a process of fitting the arrangement about a splice.

Wire splices are commonly used in electrical harnesses in the automotive industry. The invention is of particular benefit in such applications, although it is applicable in other situations in which it is needed to seal splices in a production environment.

Dimensionally recoverable tubing is often used to protect spliced wires within electrical harnesses in the automotive industry. One of the most common splice configurations is an "in line splice". In an "in line splice" each wire to be spliced has its electrically insulative covering removed eg. at one end, or at one or more other locations to expose bare electrically conductive wire. The wires to be joined are then arranged as required with all of the exposed bare wires essentially parallel and overlapping each other. Some other kinds of splice do not involve removal of an insulative covering.

The typically, but not necessarily, bare wires are then crimped, welded, soldered or otherwise joined together to form a splice "nugget". Subsequently, the nugget and the adjacent exposed conductors must be protected and sealed from the external environment. A preferred means for protecting the nugget and sealing out moisture and other contaminants is to encase the nugget in a dimensionally recoverable tubing which has a sealant/adhesive interior layer ("liner"). Typically, heat is applied to cause the sealant/adhesive liner to flow, while simultaneously causing the tubing to heat-recover (shrink) about the nugget. The tubing shrinks around the exposed wires and the adhesive/sealant flows within the tubing to cover and seal the exposed wires. The adhesive/sealant also flows along the wires to contact and cover a portion of the unstripped, electrically insulative wire covering. This provides a seal over the entire length of the exposed wires and the splice nugget, up to and including the beginning of the insulative wire covering, and thus prevents water from entering the splice and/or from flowing along the conductors inside the wire insulation. Wire butt splices and wire splices to ring terminals or other termination devices can also be sealed and protected in this way.

In addition connectors may be sealed against water ingress and bundles of wires blocked using adhesive inserts in combination with heat shrink tubing.

The complexity of vehicle harnesses, and the number of wire splices incorporated in the harnesses, are increasing due to the growing number of electrical functions on modern vehicles. As a result, vehicle manufacturers are using an increasing number of splice sealing products to ensure electrical integrity and guarantee reliability. In order to maximise productivity and minimise cost it is therefore a requirement of any automotive splice sealing product that the time taken to create a seal should be a minimum.

Current heat-shrinkable splice seal sleeves comprise a heat-shrinkable outer jacket that is either clear or black with an adhesive liner that is clear. Various heating devices are available. Known dual-wall heat shrinkable splice seal sleeves, for example Raychem RBK-ILS-125 (trade mark) splice seals available from Tyco Electronics, are particularly well suited for rapid installation when used in combination with customised application equipment, for example the Raychem RBK-ILS Mk2 heater/processor also available from Tyco. Such dual-wall heat-shrinkable-tubing splice seal products comprise a tubular construction having an outer crosslinked polymeric heat-shrinkable sleeve in combination with an inner heat-flowable adhesive/sealant liner.

When heated, the tubing shrinks and the adhesive/sealant layer melts and flows. Such products are well known in a range of different materials and sizes and are used in various industries for environmental sealing of cable and wire splices. The products are installed by sliding the sleeve and liner over the area to be sealed and heating using a heat gun, flame, infrared, or other heat source to shrink the tubing. The minimum time taken to achieve a sealed splice depends on a number of factors including the number and size of the component wires that make up the splice, the size of the tube, the recovery temperature of the tube, the melting temperature of the adhesive liner, the viscosity of the liner at the recovery temperature, the hoop stress of the tubing at the recovery temperature, the temperature of the copper nugget, the type of heating device employed and its thermal characteristics.

The invention as set out herein includes within its scope all such splices, seals and blocks as may be formed using dimensionally recoverable tubing having a liner that may be caused to flow on heating. Thus the invention includes, in addition to the aforementioned structures, structures such as ring terminal seals, stub splice seals, various kinds of connector seal and various kinds of bundling block.

For convenience herein all such structures are referred to as *"splices"* and, as the context requires, *"splice seals",* although in practice some of the structures, to which the invention relates, may not require actual splicing together of conductors or other filaments.

Improved splice seal installation times can be achieved using a product having a clear jacket and black liner in combination with IR heating of appropriate wavelength. One such method of installation overcomes the problems of polymer damage and long installation times by rapid heat transfer to the adhesive liner using a radiant heat source, a clear polymer jacket that is substantially transparent to infrared radiation and a black adhesive liner that is infrared absorbing. To achieve maximum absorbtion by the liner preferably there is minimal absorption by the jacket (ie. absorption that is as close as possible to zero).

The addition of energy absorbing materials to the jacket may retard the rate of sealing by the liner. To achieve rapid installation this conduction is best achieved by intimate interfacial bonding of jacket and liner which is maximised and most economically achieved in a coextruded product.

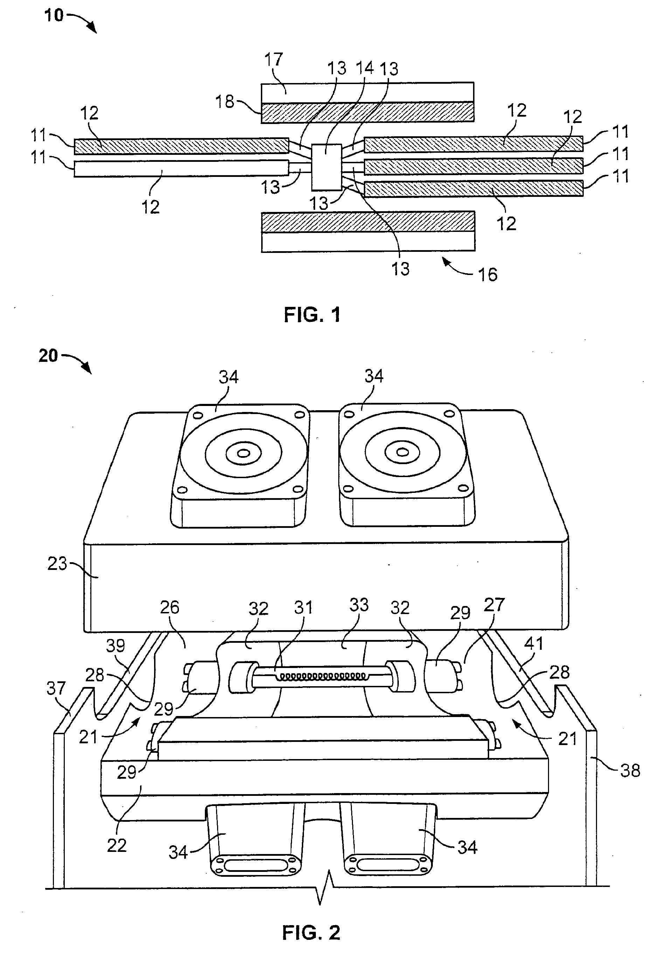

The construction of the article is shown in Figure 1. The clear jacket allows transmission of a high proportion of the radiation which is then absorbed by the black liner, increases the rate of heating, accelerates the reduction of viscosity and decreases the installation time. Reduced absorption by the clear jacket may also reduce polymer damage due to heating.

Existing automotive splice seal products such as Tyco ES2000 and RBK-ILS-125 have a black polymer outer jacket and a clear adhesive liner. Tyco product ES1000 has a clear jacket and a clear liner. The jacket materials of these products are both based on high density polyethylene. The liner material is based on a polyamide adhesive. A heat shrink tube having a clear (that is substantially non-infrared-absorbing) jacket and black liner is based on the high density polyethylene jacket of the Tyco ES1000 product in combination with a polyamide liner, for example Tyco Type 2672, containing 0.5% added Wilson 6BK40, a colour masterbatch, which incorporates the equivalent of 0.0125% carbon black. The jacket and liner are coextruded to create an effective interface for heat transfer from the liner to the jacket.

The most widely used heat source for installation of splice seals in a high volume automotive environment is the aforesaid RBK-ILS Mk2 processor, from Tyco. This comprises a retractable oven which uses hot wire filaments. Other oven configurations are available, for example the Model 19 belt heater also from Tyco.

These so-called *"infrared"* heaters use a relatively low filament temperature which produces a relatively long wavelength that is not optimised for infrared heating. As a result the heating effect is non-selective. There is significant convection heating of the splice and substrate. Using a recommended ILS processor setting of 500 the minimum times for existing number 3 size products to seal a 7-wires-to-4-wires splice using 0.5mm² cross section area wires are given below.

| Jacket | Liner | Heater | Approx. Peak Wavelength (microns) | Minimum Time to seal (secs) |
|---|---|---|---|---|
| ES2000 black | 2672 clear | ILS Mk 2 | 2.8 | 17 |
| ES2000 black | 2672 black | ILS Mk 2 | 2.8 | 16 |
| ES1000 clear | 2672 clear | ILS Mk 2 | 2.8 | 20 |
| ES1000 clear | 2672 black | ILS Mk 2 | 2.8 | 19 |

Installation times can be reduced by use of a shorter wavelength. A heater comprising three fast medium IR emitters supplied by Hereaus, when powered at 95V, produces a filament temperature of approx. 1500°C and a peak wavelength at 1.6-1.7 microns. Using this infrared heating on the clear jacket/black liner shrink article, the installation times for sealing the same 7:4 splice as above are much shorter as shown in the table below with controls using the black ES2000 jacket, the clear ES1000 liner and higher IR wavelengths. The control results are signified by asterisks.

| Jacket | Liner | Heater | Approx. Peak Wavelength (microns) | Minimum Time to seal (Single Installation) (s) |
|---|---|---|---|---|
| ES2000 black* | 2672 clear | Fast Medium | 1.6 - 1.7 | >12 |
| ES2000 black* | 2672 black | Fast Medium | 1.6 -1.7 | >12 |
| ES1000 clear | 2672 clear* | Fast Medium | 1.6 - 1.7 | 12 |
| ES1000 clear | 2672 black | Fast Medium | 1.6 - 1.7 | 9 |
| RNF100 clear | 2672 black | Fast Medium | 1.6 - 1.7 | 9 |
| ES1000 clear | 2672 black | Short | 1.4 - 1.5 | 6 |
| ES1000 clear | 2672 black | ILS Mk 2 | 2.8 | 16 |

For any given combination of splice, substrate, heater and temperature there is a time interval in which a successful seal can be created. This is known as the installation window and is defined by a minimum time to seal and a maximum time after which there is heat damage to either splice seal or wire substrate.

The sealing time of 9 seconds for the clear on black product in an IR heater is much shorter than for both the black on clear and the black on black products in the same heater and very much shorter than the same article in the longer wavelength heater. A very short sealing time of 6 seconds can be achieved using an even shorter wavelength but the time to damage the substrate is also reduced and the installation window can become impractically small.

Improved sealing times have also been demonstrated in another infrared heater. An RBK-ILS Mk2 processor has been modified to include six 400W quartz halogen lamps. The lamps are switched on only during the product heating cycle. The lamps are powered in series at 85V, 15A and have a wavelength of approx. 1.3microns. The following minimum times to seal are observed:

| Jacket | Liner | Heater | Approx. Peak Wavelength (microns) | Minimum Time to seal (Single Installation) (s) |
|---|---|---|---|---|
| ES2000 black | 2672 clear | Quartz halogen | 1.3 - 1.4 | 8 but damaged |
| ES1000 clear | 2672 clear | Quartz halogen | 1.3 - 1.4 | 9 |
| ES1000 clear | 2672 black | Quartz halogen | 1.3 - 1.4 | 6 |

A high volume production environment requires a short installation time of a few seconds that remains consistent during an extended rapid cycling. Infrared heating of a splice seal product having a clear jacket and black liner can deliver short installation times. However cumulative heating of oven components during cycling can lead to degradation of the installation window, sometimes to the point where installation is no longer possible without unacceptable damage to the substrate. The use of a product having a clear jacket and black liner in combination with IR heating works well for single installations but is not suitable for consistent rapid installations in high volume as required in the automotive industry.

In particular infrared lamps in both continuous and switched operation cause variable heating of oven components such as the shields and casing. These heated components in turn cause an increased equilibrium temperature and convection heating of substrates. Installation windows are reduced such that minimum times to seal and damage substrates vary according to frequency of use. It becomes difficult to seal splices satisfactorily and reproducibly without undesirable and impractical delays between installations to allow components to cool and equilibrate. This is unsuitable for a high volume production environment where consistent, reproducible installation of splices is required. In some cases when operating a high duty cycle the practical installation window for a splice can be reduced to zero such that damage to the substrate can occur and satisfactory sealing cannot be achieved.

The effect of a high duty cycle can be seen in the illustration below. Using the quartz halogen modified heater as above the minimum time to seal a 7:4 splice is six seconds and, when the system is allowed time to equilibrate between installations, the maximum heating time before damage is 9 seconds. The installation window of 6-9 seconds is acceptable. However when 10 splices are installed using a 6 second installation time with 10 seconds between each installation then it becomes impossible to seal the product without damage and the installation window is reduced to zero.

| Jacket | Liner | Approx. Peak Wavelength (microns) | Installation Window (one installation) (s) | Installation Window (ten installations)(s) |
|---|---|---|---|---|
| ES1000 clear | 2672 black | 1.3 - 1.4 | 6 - 9 | 0 |

According to the invention in a first aspect there is provided an apparatus, for heating an infrared-initiated splice seal, comprising a heating area defined by one or more structural components and including one or more sources of infrared heat energy; a splice support, associated with the apparatus for supporting an infrared-initiated splice seal in the heating area; and one or more cooling devices for cooling one or more said structural components and/or the splice support whereby in use of the apparatus a splice seal supported on the splice support is subject to radiant heat from the one or more sources of infrared heat energy.

The use of convection and/or conduction to cool the structural components and/or the splice support of a splice heater advantageously and unexpectedly assures that the problems, caused by heat build-up during production duty cycles of the heater, do not arise. Simultaneously the desired IR heating effect occurs unhindered, thereby permitting efficient completion of the splice seals.

Preferably the or each heating device is or includes a water-cooled heat sink, especially one that is or includes one or more heat-conducting pipes in contact (especially heat-conducting contact) with a said structural component and in use of the apparatus having flowing therethrough a cooling fluid. In preferred embodiments of the invention the cooling fluid is water the temperature of which is controlled e.g. by chilling.

The structural component is in one embodiment of the invention a reflector that preferably in use of the apparatus directs radiant heat energy from a said source of infrared heat energy towards the splice support and hence, in practical use of the apparatus, towards a supported splice.

Such a reflector is particularly prone to heating by reason of thermal cycling as aforesaid. Moreover being a comparatively large part of the interior of a splice heater it is capable of conducting heat to a range of other components connected to it. Therefore cooling the reflector is particularly advantageous.

In another embodiment of the invention the or each cooling device is a fan whose in-use output is directed towards one or more said structural components and/or the splice support (plus any supported splice) to cause cooling thereof.

In practical embodiments of the invention, the output of the fan is in the form of air that may be blown over a plurality of components in the interior of the apparatus. It is however within the scope of the invention to blow gases other than air should this be desirable.

Regardless of the precise type of gas used, an advantage of using fans as the cooling devices is that the cooling medium output from the fans may readily surround and contact a large number of components within the heating area of the apparatus. Moreover, the contact of the cooling medium with such components is intimate, and hence thermally efficient.

In a preferred embodiment of the invention the or each source of infrared heat energy is capable of generating energy in a wavelength range of approximately 1.3 -1.7 microns.

Thus the apparatus of the invention is suitable for embodiments either using infrared emitters, or heating lamps.

In one preferred form of the invention the or each source of infrared energy is a lamp, and the apparatus includes one or more switches for selectively switching on and off the or each said lamp according to a switching sequence corresponding to desired splice heating periods.

In such an arrangement the cooling regime that arises during operation of the apparatus, together with switched operation of the lamps, provides for a highly efficient process in which convective and conductive heating of structural components of the heater apparatus is kept to a minimum. As a result, short processing times are achieved, without the above-described undesirable reductions in the length of the installation window.

It is further preferable, in such an arrangement, that the or each said lamp is a quartz halogen lamp that is capable of generating light in a wavelength range of approximately 1.3 - 1.4 microns. Such lamps are efficient in use and lend themselves readily to a switched operation of the kind indicated.

However, in an alternative arrangement, the or each source of radiant heat energy may operationally be an infrared emitter that is capable of generating a filament temperature of approximately 1500°C and a peak wavelength of approximately 1.6 - 1.7 microns.

In a production environment it is commonplace for the splices to be prepared externally of the heating area of the apparatus, and moved thereinto eg. on a moveable support when it is desired to initiate the seal through heating. Thus in one preferred embodiment of the invention the splice support includes a carriage that in use of the apparatus is moveable into the heating area, from the exterior thereof, while a splice seal is supported thereon.

The invention is also considered to reside in a method of initiating an infrared initiated splice seal comprising the steps of supporting the splice seal on the splice support of an apparatus as defined herein; and operating the or each source of infrared heat energy while simultaneously operating one or more said cooling devices.

In one preferred embodiment of this method, the or each said source of infrared heat energy is or includes a lamp; and the method includes the step of switching on and off the or each said lamp according to a switching sequence corresponding to desired splice heating periods.

The method of the invention designed to reduce installation time by increasing the rate of adhesive liner heating under the polymer jacket as a result of which the sleeve shrinks and seals more rapidly. The level of carbon black required to increase significantly the radiant heating of the liner is surprisingly low, for example as low as 0.0125%, depending on the grade of carbon black selected, and will normally be in the range 0.0001% - 10%, preferably 0.001% - 5%, most preferably 0.01% - 1.0% (percentages by weight of the liner material). The systems currently available do not select wavelength and product construction to maximise heat absorption by the adhesive.

To seal a splice a sealant material must flow around and between the bare component wires of a metal nugget where the polymer insulation has been removed. In a dual wall heat shrink product the liner must therefore be heated to the point at which it will flow and must then be forced tin to and around the nugget and insulation by the heat shrink jacket. It is believed that the existing combinations of ovens and products heat the polymer jacket predominantly by convection. Heating of the liner by convection and conduction is inefficient and requires either high temperatures or long installation times which can damage the polymer material of both the heat shrink jacket and the wire substrate. Long cycle times are undesirable.

The proposed method overcomes the problems of polymer damage and long installation times by rapid heat transfer to the adhesive liner using a radiant heat source, a clear polymer jacket that is substantially transparent to infrared radiation and a black adhesive liner that is infrared absorbing. As indicated, the construction of the article is shown in Figure 1 described below.

In another aspect of the invention there is provided a method of sealing splices in insulated conductors comprising the steps of heating in a convection - and/or conduction-cooled infrared heater that includes at least one source of infrared heat energy generating infrared heating energy in the wavelength range 1.3 microns to 1.7 microns a dual wall, heat shrinkable tubular article comprising (i) a jacket material that is substantially transparent to infrared energy and (ii) a fusible inner liner that substantially absorbs energy in infrared wavelengths at least in the range 1.3 microns to 1.7 microns.

Preferably the jacket and liner used in such a method are coextruded. It is also preferable that the liner is or includes a layer of adhesive material. In an alternative arrangement the inner layer (liner) may be coated onto the jacket interior.

Conveniently the wavelength of the infrared light lies in the range 1.3 - 1.4 microns or in the range 1.6 to 1.7 microns.

In a preferred embodiment of the invention the heater includes plural sources of infrared heat energy.

In one arrangement according to the invention the or each source of infrared heat energy is a switchable lamp; and the method includes the step of selectively switching on and off the or each lamp according to a switching sequence corresponding to desired splice heating periods.

Conveniently the infrared heater includes one or more supports for a splice; and the method includes the step of supporting a splice in the one or more supports prior to heating of the splice.

The method may optionally involve the use of an infrared heater including a pair of openable and closeable shells that when closed define a heating area; and the method may include the step of closing the shells before heating of the splice commences.

Preferably the infrared heater includes one or more cooling devices; and the method includes one or more cooling devices; and the method includes the step of activating at least one said cooling device before heating of the splice commences.

In one preferred arrangement at least one said cooling device includes one or more pipes that is in heat-transferring relation to one or more parts of the infrared heater; and the method preferably includes the step of causing a cooling fluid to flow in at least one said pipe. Conveniently the cooling fluid is water.

In an alternative or additional arrangement at least one said cooling device includes one or more blower devices, especially fans, that are capable of blowing a cooling gas (especially air) towards one or more parts of the infrared heater; and the method preferably includes the step of activating at least one said blower-device.

The steps of the method of the invention preferably may be repeated seriatim plural times in order to permit sealing of a plurality of splices.

In one particular embodiment of the method the steps thereof are repeated ten times with a ten second period between successive cycles, the installation window resulting from practising the method lying in the range 6s to 8s.

In another aspect the invention resides in a heat shrinkable tubular article comprising (i) a heat-shrinkable jacket material that is substantially transparent to infrared radiation and (ii) a heat-flowable inner adhesive layer that absorbs infrared wavelengths, the jacket and the liner being formed together by a coextrusion process.

Such an article is particularly suited for processing in apparatus, or in accordance with methods, as defined herein.

The adhesive layer of such an article according to the invention optionally may contain carbon black or other pigment to increase the rate of infrared heating of the adhesive layer when the article in use is subjected to infrared radiation.

More specifically in such an article the adhesive layer contains carbon black in the range 0.0001 % to 10%, preferably 0.001% to 5%, most preferably 0.01% to 1.0%, by weight of the whole adhesive layer.

The scope of the invention includes an article as aforesaid when processed in apparatus according to the invention as defined herein, and/or in accordance with methods defined herein.

Thus, in summary, to eliminate the problems of variable convective heating and to enable rapid, consistent, high volume production of sealed splices the invention comprises an oven including both a short wave infrared heat source and a source of active cooling. The cooling reduces and stabilises the equilibrium temperature of both oven components and the environment of the splice. A variety of means of active cooling may be employed but the most practical are air and water, for example forced air cooling using fans. To further reduce the effect of undesirable heating the IR lamps may be switched on only for the period of installation and turned off during the loading and removal of the splice. The use of suitable active cooling controls and stabilizes the heating of the system such that the equilibrium temperature becomes independent of the duty cycle employed. Convection heating is reduced and practical installation windows can be maintained using a practical duty cycle.

There now follows a description of preferred embodiments of the invention, by way of non-limiting example, with reference being made to the accompanying drawings in which:
Figure 1 is a schematic, cross-sectional view showing the structure of a typical infrared-initiated splice seal;
Figure 2 is a perspective view of one form of apparatus in accordance with the invention; and
Figure 3 is a perspective view of a shell, of another infrared heating apparatus according to the invention, that may be placed behind the location of a reflector that is visible in Figure 2.

Figure 1 shows one form of infrared initiated splice seal 10 applied to a *per se* known in-line splice. Within the scope of the invention similar such seals may be used in a range of other constructions such as ring terminals, butt splices, connector seals and bundle blocks.

In Figure 1 a plurality of wires 11 having insulating covers 12 are lain in abutting relationship such that they are connectable together.

The metallic conductors 13 of the wires are exposed over predetermined lengths at the ends of the wires 11. A *per se* known crimp 14 is crimped about the exposed conductor wires 13 to connect them together in an electrically conducting manner and define a *"nugget"* as aforesaid.

A cylindrical splice sleeve 16 surrounds the splice and extends along the wires 11 to either side thereof.

The splice sleeve 16 comprises two, coextruded layers 17, 18.

Outer jacket layer 17 is infrared-transmitting and in practical embodiments is a clear material. It is also *"heat-recoverable"* (ie. it shrinks on heating).

Inner liner layer 18 is infrared energy-absorbing and also fusible on heating such as to become liquid.

On heating of the splice seal 10 using infrared radiation, the liner layer 18 of the sleeve 16 absorbs infrared heat energy, melts and surrounds the conductor wire ends 13 and the crimp 14 such as to seal the splice in a *per se* known manner. At the same time, shrinking (*"recovery"*) of the outer jacket layer 17 occurs such as to compress the liquefied inner layer 18 and force it into intimate, sealing contact with the exposed parts of the splice.

Judicious choice of the materials of the layers 17, 18 and the heating regime applied thereto, results in a highly efficient sealing method. The use of a co-extruded jacket 17 and liner 18 combination (or a jacket 17 and liner 18 combination in which intimate thermal contact between the jacket 17 and liner 18 is achieved in alternative ways such as by coating of the liner inside the jacket) offers advantages in terms of the efficiency of operation of the sleeve 16. The jacket 17 and liner 18 have the characteristics set out hereinabove.

Figure 2 shows in perspective view a heating apparatus 20 according to the invention.

Heating apparatus 20 is intended for heating infrared-initiated splice seals in a production environment involving a heavy duty cycle in which large numbers of the splice seals are serially heated in order to complete them.

The apparatus 20 comprises a heating area 21 defined by a pair of structural components 22, 23 in the form of a pair of rigid, metallic shells that are hingeably supported in a framework. The shells 22, 23 are such that they can be moved towards and away from one another on the hinges so as to close and open the heating area 21. The shells 22, 23 as shown each comprise a plurality of walls that between them define a hollow interior when the shells 22, 23 are moved together so that the edges of their walls are in abutting relationship.

Each shell 22, 23 comprises a pair of end walls of which two, 26, 27 are visible in Figure 2.

Each end wall 26, 27 has formed therein a semi-circular cut-out 28 in which a partly-completed splice, in the form shown schematically in Figure 1, may be positioned to undergo heating in the apparatus 20. In such condition the wires of the splice are located in the semi-circular cut-outs 28 in a manner known in the art.

Further, outermost walls 37, 38 are upstanding at the ends of lower shell 23. The outermost walls 37, 38 provide structural support for the apparatus 20 and also form part of a safety / insulation guard intended to protect operators of the apparatus 20.

The outermost walls 37, 38 include recessed portions 39, 41 that when the shells 22, 23 are closed are essentially in register with the cut-outs 28.

The arrangement is such that when the shells 22, 23 are open a series of preassembled splices requiring sealing may be inserted into the heating area 21 seriatim on respective, moveable splice supports (not shown) which may be eg. carriages. Such an arrangement allows rapid, serial processing of the respective splices in the apparatus 20, in a manner described hereinbelow.

Respective support / connector brackets 29 are supported within shells 22 and 23 extending along the length of elongate heating area 21 on the interior thereof. Each support / connector bracket 29 includes operatively supported therein a lamp bulb 31 that is oriented to direct infrared heat energy from the outer part of the heating area 21 towards the centre axis thereof, along which a splice seal 10 is lain during heating operations.

To this end, each support / connector bracket includes at either end a connector clamp 32 for connecting each bulb 31 to a source of electrical power; and supporting each bulb 31.

The heating area incorporates reflector panels 33 lying between each bulb 31 and the exterior walls of the shells 22, 23 such that the reflector panels 33 intensify the radiant heat energy that is directed towards splice seal supported in apparatus 20 during operation thereof.

Although only two lamp locations are shown in Figure 2, the apparatus 20 may include up to six sources of infrared heat energy in the form of lamps 31 located as desired (in accordance with the chosen arrangement) in the heating area 21. Different numbers of sources however may be employed in other embodiments within the scope of the invention.

The exterior walls of the shells 22, 23 are perforated and support respective pairs blower devices in the form of air fans 34. These are arranged so as in use of the apparatus 20 to blow air from the exterior of the heating area 21 into the interior thereof and over the various structural components constituted by the walls of the shells 22, 23, the cut-outs 28, the bulbs 31, the support / connector brackets 29 and the reflectors 33. As explained in relation to the examples below, such an arrangement advantageously by convection (in the case of the fans shown) reduces the temperature of the various components whilst not inhibiting the coupling of infrared energy by radiation from the lamp bulbs 31 to the inner layers 18 of the cylindrical sleeves 16 of the splice seals 10 inserted into the apparatus.

In a production run, it is a simple, straightforward matter to open the shells 22, 23 away from one another, insert an unsealed splicesupported on a support (carriage), close the shells 22, 23 together to define the heating area 21, operate the lamps 31 and operate the fans 34 in order to assure that heating of the splice seal occurs predominately by radiation and to no appreciable extent by conduction or convection . This in turn provides short processing times as aforesaid, without unacceptably diminishing the installation window.

The lamps 31 and the fans 34 may be switched off while the shells are separated during removal of the completed splice and insertion into the heating area 21 of the next splice requiring completion. Alternatively, in a presently preferred mode of use, the fans may be operated continuously

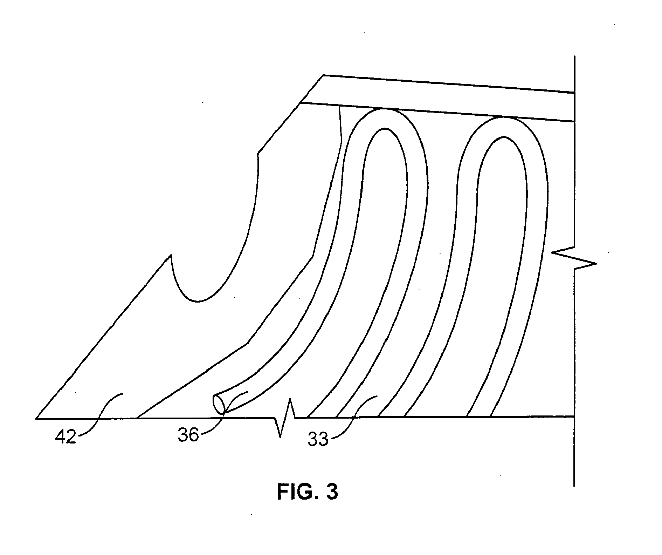

Figure 3 shows a variation on part of the Figure 1 apparatus, in which the fans need not be present and from which in practice the fans would be absent.

In this embodiment of the invention, the fans 34 are dispensed with. Instead, the cooling device is in the form of a heat exchanger. This in turn is embodied as a copper pipe 36 that is secured in heat-transferring (conducting) contact with the walls of the shell 22.

This is achieved through mounting of the copper pipe 36 on the interior surface of a further shell 42. One such further shell is fitted onto the exterior of one or both of the shells 22, 23 such that the pipe(s) 36 contact the outsides of the shells 22, 23.

A cooling fluid, such as chilled water, may be pumped (for example at a rate of 1 litre per minute) along the copper pipe 36 (which is labyrinthine in structure) so as to perform a heat exchange with the material of the shell 22, 23 in question thereby cooling it by conduction.

Using this apparatus essentially the same advantage is achieved, as in the case of the Figure 2 embodiment that employs cooling fans.

In a practical arrangement, the copper pipe 36 would extend over the entire inner surface of the shell 22. A similar copper pipe 36 would also be present, in conducting contact with the inner side of the other shell 23.

In one practical embodiment of the invention an RBK-ILS Mk2 processor was modified to include six 400W quartz halogen lamps which, when powered in series at 85V and 15A, had a wavelength of approximately 1.3 microns. These were switched on only during the product heating cycle. Within each half-shell containing three lamps was fitted an aluminium reflector to focus the radiation towards the product (splice). Between the reflector and the rear support frame was fitted a piped, water cooled heat sink with good thermal contact to the adjacent shell. Cold water was pumped through at 1 litre per minute.

In an alternative version of the same heater the water-cooled heat sink was replaced by 2 cooling fans on each half-shell which in used force air over and around aluminium reflective shields and other oven components. Each cooling fan had an air flow of 25m³ per hour.

The effect of active cooling can be seen in the table below. Using the quartz halogen modified heater the installation window for a 7:4 splice was 6-9 seconds when the system is allowed time to equilibrate between installations. However when 10 splices were installed using a 6 second installation time with 10 seconds between each installation then it became impossible to seal the product without damage and the installation window was reduced to zero. When the heater was further modified to include active cooling using either water or air then an installation window of 6-8 seconds could be maintained and a high duty cycle implemented.

| Jacket | Liner | Cooling | Approx. Peak Wavelength (microns) | Installation Window (one installation)(s) | Installation Window (ten installations)(s) |
|---|---|---|---|---|---|
| ES1000 clear | 2672 black | off | 1.3 - 1.4 | 6 - 9 | 0 |
| ES1000 clear | 2672 black | on | 1.3 - 1.4 | 6 - 9 | 6 - 8 |

The effect of active cooling could be seen in temperature monitoring of oven components. An RBK-ILS Mk2 processor was modified to include six 400W quartz halogen lamps which, when powered in series at 85V and 15A, had a wavelength of approx. 1.3 microns. These were switched on only during the product heating cycle. Behind each half-shell containing three lamps was fitted an aluminised reflector to focus the radiation towards the product. Between the reflector and the rear support frame was fitted a piped, water cooled heat sink. Cold water was pumped through at 1 litre per minute. The temperature of the reflector was monitored during a very high duty cycle of 30 installations with an installation time of 6 seconds and 6 seconds between installations. Without cooling the temperature reached an average of 270C after 2 cycles. With cooling the temperature reached an average of 110C.

Using fan cooling the equilibrium temperatures with and without cooling during the same cycle were 270C and 110C respectively.

Thus the invention provides an effective, practical and low-cost arrangement that dramatically improves the performance of heating apparatuses for infrared-initiated splice seals.

## Claims

1. An apparatus, for heating an infrared-initiated splice seal, comprising a heating area defined by one or more structural components and including one or more sources of infrared heat energy; a splice support, associated with the apparatus for supporting an infrared-initiated splice seal in the heating area; and one or more cooling devices for cooling one or more said structural components and/or the splice support whereby in use of the apparatus a splice seal supported on the splice support is subject to radiant heat from the one or more sources of infrared heat energy.

2. An apparatus according to Claim 1 wherein the or each cooling device is a water-cooled heat sink.

3. An apparatus according to Claim 2 wherein the water-cooled heat sink is or includes one or more heat-conducting pipes in conducting contact with a said structural component and in use of the apparatus having flowing therethrough a cooling fluid.

4. An apparatus according to Claim 3 wherein the structural component is a reflector.

5. An apparatus according to Claim 4 wherein the reflector is arranged to direct radiant heat energy from a said source of infrared heat energy towards the splice support.

6. An apparatus according to Claim 1 wherein the or each cooling device is a fan whose in-use output is directed towards one or more said structural components and/or the splice support convectively to cause cooling thereof.

7. An apparatus according to any preceding claim wherein the or each source of infrared heat energy is capable of generating energy in a wavelength range of approximately 1.3 -1.7 microns.

8. An apparatus according to any preceding claim wherein the or each source of infrared energy is a lamp and wherein the apparatus includes one or more switches for selectively switching on and off the or each said lamp according to a switching sequence corresponding to desired splice heating periods.

9. An apparatus according to Claim 7 wherein the or each said lamp is a quartz halogen lamp that is capable of generating light in a wavelength range of approximately 1.3 -1.4 microns.

10. An apparatus according to any of Claims 1 to 6 wherein the or each source of radiant heat energy is an infrared emitter that is capable of generating a filament temperature of approximately 1500°C and a peak wavelength of approximately 1.6 -1.7 microns.

11. An apparatus according to any preceding claim wherein the splice support includes a carriage that in use of the apparatus is moveable into the heating area, from the exterior thereof, while a splice seal is supported thereon.

12. A method of initiating an infrared-initiated splice seal comprising the steps of supporting the splice seal on the splice support of an apparatus according to any preceding claim; and operating the or each source of infrared heat energy so as to heat the splice seal while simultaneously operating one or more said cooling devices.

13. A method according to Claim 12 wherein the or each said source of infrared heat energy is or includes a lamp; and wherein the method includes the step of switching on and off the or each said lamp according to a switching sequence corresponding to desired splice heating periods.

14. A method of sealing splices in insulated conductors comprising the steps of heating in a convection - and/or conduction-cooled infrared heater that includes at least one source of infrared heat energy generating infrared heating energy in the wavelength range 1.3 microns to 1.7 microns a dual wall, heat shrinkable tubular article comprising (i) a jacket material that is substantially transparent to infrared energy and (ii) a fusible inner liner that substantially absorbs energy in infrared wavelengths at least in the range 1.3 microns to 1.7 microns.

15. A method according to Claim 14 wherein the jacket and the liner are coextruded.

16. A method according to Claim 14 or Claim 15 wherein the liner is or includes a layer of adhesive material.

17. A method according to any of Claims 14 to 16 wherein the wavelength of the infrared light lies in the range 1.3 - 1.4 microns or in the range 1.6 to 1.7 microns.

18. A method according to any of Claims 14 to 17 wherein the heater includes plural sources of infrared heat energy.

19. A method according to any of Claims 14 to 18 wherein the or each source of infrared heat energy is a switchable lamp, and wherein the method includes the step of selectively switching on and off the or each lamp according to a switching sequence corresponding to desired splice heating periods.

20. A method according to any of Claims 14 to 19 wherein the infrared heater includes one or more supports for a splice; and wherein the method includes the step of supporting a splice in the one or more supports prior to heating of the splice.

21. A method according to any of Claims 14 to 20, wherein the infrared heater includes a pair of openable and closeable shells that when closed define a heating area; and wherein the method includes the step of closing the shells before heating of the splice commences.

22. A method according to any of Claims 14 to 21 wherein the infrared heater includes one or more cooling devices; and wherein the method includes the step of activating at least one said cooling device before heating of the splice commences.

23. A method according to Claim 22 wherein at least one said cooling device includes one or more pipes that is in heat-transferring relation to one or more parts of the infrared heater; and wherein the method includes the step of causing a cooling fluid to flow in at least one said pipe.

24. A method according to Claim 23 wherein at least one said cooling device includes one or more blower devices that are capable of blowing a cooling gas towards one or more parts of the infrared heater; and wherein the method includes the step of activating at least one said blower device.

25. A method according to Claim 24 wherein the cooling gas is air.

26. A method according to any of Claims 13 to 25 the steps of which are repeated seriatim plural times in order to permit sealing of a plurality of splices.

27. A method according to Claim 26 wherein when the steps of the method are repeated ten times with a ten second period between cycles, the installation window lies in the range 6 to 8s.

28. A heat shrinkable tubular article comprising (i) a heat-shrinkable jacket material that is substantially transparent to infrared radiation and (ii) a heat-flowable inner adhesive layer that absorbs infrared wavelengths, the jacket and the liner being formed together by a coextrusion process.

29. An article according to Claim 28 wherein the adhesive layer contains carbon black or other pigment to increase the rate of infrared heating of the adhesive layer when the article in use is subjected to infrared radiation.

30. An article according to Claim 29 wherein the adhesive layer contains carbon black in the range 0.0001% to 10%, preferably 0.001% to 5%, most preferably 0.01% to 1.0%, by weight of the whole adhesive layer.

31. An article according to any of Claims 28 to 30 when heated in an apparatus according to any of Claims 1 to 11.

32. An article according to any of Claims 28 to 30 when processed by a method according to any of Claims 12 to 27.
